# EUROPEAN PATENT SPECIFICATION

(11) **EP 4 298 046 B1**
(45) Date of publication and mention of the grant of the patent: **14.08.2024**
(21) Application number: 22772510.8
(22) Date of filing: 01.09.2022
(51) Int. Cl.: B66C 23/18, B66C 23/52

(54) **ARRANGEMENT OF A CRANE ON A FLOATING WIND POWER STATION**
ANORDNUNG EINES KRANS AN EINER SCHWIMMENDEN WINDENERGIEANLAGE
AGENCEMENT D'UNE GRUE SUR UNE CENTRALE ÉOLIENNE FLOTTANTE

(30) Priority: 03.09.2021 SE 2151104
(43) Date of publication of application: 03.01.2024
(73) Proprietor: Bassoe Technology AB, 404 23 Göteborg (SE)
(72) Inventor: LUDWIGSON, Robert, 413 28 Göteborg (SE); FAGERLUND, Jonas, 433 51 Göteborg (SE)
(74) Representative: Zacco Sweden AB
(86) International application number: PCT/EP2022/074387
(87) International publication number: WO 2023/031360

(56) References cited:
- EP-A2- 2 275 340
- WO-A1-2020/167137
- WO-A1-2021/141534
- GB-A- 2 142 312
- US-A1- 2019 218 075

## Description

### TECHNICAL FIELD

This invention relates to a method for arranging a crane machine on a wind power station that floats in open water. The invention also relates to a wind power station adapted for such a crane arrangement.

### BACKGROUND OF THE INVENTION

There is a growing interest for offshore wind power, i.e. sea-based wind power stations/turbines that produce electricity. Such a wind turbine may have a fixed underwater foundation or, in particular at water depths larger than around 50-60 m, may be floating anchored to the bottom. The turbine tower may extend up to, say, 150 m above sea level and each turbine blade may be more than 100 m long.

Besides manufacturing and installation, a challenge in offshore wind power is maintenance and repair of the wind turbine, in particular major service actions such as replacement of gearbox, generator or a turbine blade. Although such major service actions are likely to be rare, it is still necessary that such an action can be carried out and that the cost is reasonable.

For fixed wind turbines, major service actions may be carried out using a jack-up vessel provided with a sufficiently large crane for handling e.g. dismounting and remounting of a damaged and repaired turbine blade.. Such vessels can stand on the bottom and lift itself above the sea level and can thus work in a stable way unaffected by the waves. Since both the turbine tower and the crane in such a case are fixed in relation to each other, maintenance and repair can be carried in principally the same way as for land-based wind turbines. Document US 2019/218075 describes such a crane and its use, mounted on a jack-up vessel and able to carry out at maintenance works on wind turbines. It comprises at least a rotatable crane base structure, a main boom and hoist components for lifting and lowering materials. The crane is configured to lift/lower heavy wind turbine elements to/from an upper part of a wind turbine. The crane can be transported to the jack-up vessel in a partly disassembled state.

For floating wind turbines there is a more complicated situation. Besides that the water depth might be too large for a jack-up vessel, the floating wind turbine platform moves with the waves and would anyway lead to an unacceptable movement of the turbine tower in relation to a fixed crane/jack-up vessel. The relative movement at the top of the tower can be very large in the horizontal direction since a few degrees variation of the tilt angle at sea level generates a significant horizontal movement of the top of the tower. Non-fixed crane vessels, such as heavy lift vessels (HLVs), may give rise to an even larger relative movement but may possibly be used in sheltered water.

A proposed solution to the problem related to maintenance and repair of floating wind power turbines is to disconnect the turbine platform from its anchoring and electrical systems, tow it to the shore and carry out the service in a harbour where e.g. a land-based crane may be used. An advantage of doing the service onshore is that complicated offshore work is avoided. However, this requires, for instance, efficient and safe procedures for disconnecting and connecting the turbine platform. Further, suitable harbours with crane capacity must be available, the towing distance should not be unreasonably long, etc.

In short, there is need for improvements related to maintenance and repair of floating wind power turbines.

### SUMMARY OF THE INVENTION

An object of this invention is to simplify and reduce costs for maintenance and repair of floating wind power turbines. This object is achieved by the method and wind power station defined by the features contained in the corresponding independent claims. The dependent claims contain advantageous embodiments, further developments and variants of the invention.

This disclosure concerns a method for arranging a crane machine on a wind power station that floats in open water. The wind power station comprises a buoyant platform provided with a wind turbine extending upwards from the buoyant platform. The buoyant platform comprises at least a first and a second support point located horizontally spaced apart in relation to each other and at a substantially similar level above a surface of the open water.

The buoyant platform may be a semi-submersible platform comprising three or more stabilizing buoyant columns connected by buoyant pontoons or other connectors, or it may have another configuration, such as having a rectangular buoyant structure. The wind turbine typically comprises a tower and, arranged in an upper part thereof, one or more (typically three) blades operatively connected to an electric generator. As described further below, the first and second support points are used for supporting the crane machine during assembling (and dissembling, and partly during operation). These support points may be the upper sides of two horizontally separated platform columns or may be two spaced apart points on a horizontally extending deck of the buoyant platform. The distance between the first and second support point may be at least 30 m but may be more than 50 m. There might be further support points involved in supporting the crane, which may be arranged in some row, and if so, the distance between the most remote supporting points (i.e. the first and second supporting points) may be more than 50 m. The height of the turbine tower above the support points may be at least 1.5 times the horizontal distance between the support points.

Crane machines are well known as such. In the present disclosure, the crane machine is of the type comprising at least a rotatable crane base structure, a main boom, and hoist components, such as a hook, hoist wires, winches and motors for driving the winches, for lifting and lowering materials. The rotatable crane base structure is a rotatable superstructure that allows the crane as a whole to rotate and is typically provided with a derrick/A-frame, winches and winch motors, an operator's cab, etc., and may be referred to as a slewing platform. The crane base structure/slewing platform is normally rotatably supported on an undercarriage. The main boom, which, in the applications discussed here, typically is at least 30 m long (and is preferably telescopic and thus even longer in its extended state), is connected to the rotatable crane base structure when the crane machine is fully assembled.

Further boom parts may be connected to the main boom, such as a jib. The crane machine preferably contains also a derrick boom that, when the crane machine is assembled, is connected to the crane base structure and is arranged to guide supporting wires from the top of the main boom to the crane base structure at an angle in relation to the main boom so as to reduce or eliminate bending forces in the main boom during lifting.

The crane machine, when arranged on the wind power station with the main boom connected to the rotatable crane base structure and extending in an upwards direction and with the hoist components installed, is configured to lift/lower heavy wind turbine components to/from an upper part of the wind turbine.

The method comprises the steps of:
- providing the crane machine in an at least partly disassembled state onto one or more vessels and arranging the one or more vessels in association with the buoyant platform,
- moving/lifting the at least partly disassembled crane machine from the one or more vessels onto the buoyant platform, wherein the rotatable crane base structure and the main boom are disconnected from each other during moving/lifting,
- assembling the crane machine when positioned on the buoyant platform,
wherein the moving/lifting-step comprises:
- positioning the rotatable crane base structure at the first support point and positioning the main boom substantially horizontally with a first end portion located at the first support point, and
- positioning the main boom so as to be supported by the second support point as well as by the first support point and/or a further support point arranged between the first and second support points,
wherein the assembling-step comprises:
- connecting the first end portion of the main boom to the rotatable crane base structure when the main boom and the rotatable crane base structure are positioned on the buoyant platform.

The above method provides for arranging a crane machine suitable for maintenance and repair of a wind power turbine onto a floating wind power station. Accordingly, it is not necessary to disconnect the power station from its anchoring and electrical systems, tow it to the shore and carry out the service onshore. When the turbine service is completed, the crane machine can be dissembled and moved/lifted back to the same (or other) vessels in principally the same, but opposite, way as it was assembled and arranged onto the buoyant platform.

When the crane is assembled, the main boom can be (lowered and) placed with its upper, remote end onto the second support point, for instance if strong winds make it necessary to postpone the maintenance.

The vessels used may be provided with relatively small cranes that can move and lift the separate crane parts from the vessel(s) to the buoyant platform. At least these small cranes should be capable of moving and lifting crane parts smaller and lighter than the main boom, such as the rotatable crane base structure, an undercarriage for the crane base structure and the derrick boom. As described below, the derrick boom, in combination with the crane base structure and, for instance, an additional, temporary and smaller derrick boom or an A-frame, can be used to form a temporary crane on the buoyant platform that is capable of lifting/moving the main boom from the vessel onto the buoyant platform. When the main boom is positioned onto the buoyant platform, its first (lower) end portion may be positioned onto the rotatable crane base structure (which is supported by the first support point).

To lift and move the main boom from the vessel using a vessel crane would require a very large vessel crane with very high strength. Even if such a vessel crane could be provided, it would still be a major challenge to lift the large and heavy main boom onto the platform using the vessel crane since there is a relative movement between the vessel and the platform.

The weight of a crane machine of the type discussed here is considerable, in particular when lifting a heavy wind turbine component. Assembling and operating the crane machine is thus likely to have an effect on the floating properties of the buoyant platform. Therefore, the buoyant platform is preferably equipped with a controllable ballast system.

In an embodiment, the crane machine further comprises an undercarriage onto which the rotatable crane base structure is rotatably supported when the crane machine is assembled, wherein the method comprises: positioning and securing the undercarriage at the first support point before positioning the rotatable crane base structure onto the undercarriage at the first support point.

Although it is possible to arrange the undercarriage onto the first support point already before towing the buoyant platform offshore, e.g. already during manufacturing of the buoyant platform, it is generally an advantage to provide the platform with as few, simple and robust components as possible since the platform will be exposed to harsh conditions when located offshore. Preferably, the undercarriage, which might include roller bearings etc., forms part of the dissembled crane machine loaded onto the vessel(s) and is lifted onto the floating platform together with the other crane parts. The first support point may, however, be provided with a connection element for securing the undercarriage to the buoyant platform. The connection element may be a bracket or other fixation element adapted to secure the undercarriage to the platform. The connection element may be seen as a part of the undercarriage.

In an embodiment, the crane machine further comprises a derrick boom configured to be connected via a lower end thereof to the rotatable crane base structure and extend upwards at an angle in relation to the main boom so as to support the main boom when arranging wires between an upper part of the main boom to the rotatable crane base structure via an upper part of the derrick boom, wherein the method comprises: positioning the derrick boom with its lower end at or onto the first support point and connecting the derrick boom to the rotatable crane base structure.

It is not necessary that the derrick boom is connected to the crane base structure directly after having positioned the derrick boom on the buoyant platform; other method steps may be carried out before connecting the derrick boom.

In an embodiment, the crane machine further comprises an additional boom or frame structure that is shorter than the derrick boom, wherein the additional boom or frame structure is connected or configured to be connected via a lower end thereof to the rotatable crane base structure and extend upwards, wherein the method comprises: arranging the additional boom or frame structure at the rotatable crane base structure so that the lower end of the additional boom or frame structure is connected to the rotatable crane base structure.

The additional boom or frame structure may, for instance, be in the form of a so-called A-frame that commonly forms part of crane machines or an additional (derrick) boom that may be of a temporary type used only for forming a temporary crane machine (see below). The additional boom or frame structure may be connected to the rotatable crane base structure already before being lifted on board the buoyant platform. If not already connected, positioning and connecting of the additional boom or frame structure may be carried out as an integrated method step or as two separate steps, similar to the derrick boom.

In an embodiment, the crane machine further comprises a counter weight configured to be connected to the rotatable crane base structure via a connection arrangement so as to be located at a distance from the rotatable crane base structure in the horizontal direction, wherein the method comprises: connecting the counter weight to the rotatable crane base structure via the connection arrangement.

The counter weight may be in the form of a tank arranged for being filled with water. Such a tank can be empty and thus light during transport on the vessels, during lifting onto the buoyant platform and during connection to the crane base structure. Pumps, pipes and similar may be used to regulate the amount of water in the tank (i.e. the weight of the tank) during assembly and operation of the crane machine.

The crane machine is preferably configured to allow adjustment of the horizontal distance between the counter weight and the rotatable crane base structure to adjust a momentum of the counter weight without changing the weight. For this purpose, the connection arrangement may be configured so as to allow for adjustment of its length, for instance by providing the connection arrangement with a hinge.

In an embodiment, the method comprises: forming a temporary crane machine comprising the derrick boom, the additional boom or frame structure, the counter weight and the rotatable crane base structure, wherein the derrick boom forms a main crane boom and the additional boom or frame structure forms a derrick element for the crane boom; and moving/lifting the main boom from the one or more vessels onto the buoyant platform using the temporary crane machine.

The main boom is likely to be the largest and heaviest part of the crane machine and is much more difficult to lift on board the buoyant platform from a vessel crane than smaller and lighter parts, such as the rotatable crane base structure and the derrick boom. Lifting and moving the main boom from the vessel can instead be carried out by the temporary crane machine formed on the buoyant platform. The main boom can be connected to the rotatable crane base machine after having positioned the main crane properly using the temporary crane machine.

In an embodiment, the method comprises: raising the main boom so as to extend upwards from the rotatable crane base structure using the derrick boom, the counter weight, the rotatable crane base structure and the hoist components.

The step of raising the main boom may be preceded by steps including disconnecting the counter weight from the crane base structure, rotating the crane base structure 180°, and reconnecting the counter weight to the crane base structure but on the opposite side compared to when forming the temporary crane machine, if this is needed to get the derrick boom and the main boom located properly in relation to each other. If the main boom is of the telescopic type it may be extended after the raising step (or before, or during, if desired).

In an embodiment, the counter weight comprises a tank configured to be filled with water, wherein the method comprises: regulating the amount of water in the counter weight tank.

In an embodiment, the buoyant platform is a semi-submersible platform comprising at least two horizontally separated buoyant columns, wherein said columns, typically the upper sides of these columns, form the first and second support points. Actual supports may be arranged onto or close to the support points. Additional supports or support points may be arranged between the first and second support points. The wind turbine may be arranged on a third column. Further columns may be included in the platform. The columns may be connected by buoyant pontoons and/or connections/bracings, and the columns may be arranged in different ways in relation to each other. Other types of buoyant platforms can be used, such as barge-like platforms. If a deck of the platform extends over a relatively long distance including the first and second support points it is typically easy to arrange additional supports along the deck.

In an embodiment, the first support point is provided with a connection element configured to be connected to an undercarriage for support of the rotatable crane base structure.

In an embodiment, the wind turbine comprises a tower and, arranged in an upper part of the tower, one or more blades operatively connected to an electric generator.

In an embodiment, the wind turbine is arranged on a buoyant column forming part of the buoyant platform.

In an embodiment, the first and second support points are located at least 30 m from each other in a horizontal direction.

In an embodiment, each of the first and second support points is located at a distance from the wind turbine in the horizontal direction so that the wind turbine and the first and second support points form a triangle in the horizontal plane, such as an isosceles triangle.

The invention also concerns a wind power station comprising a buoyant platform provided with a wind turbine extending upwards from the buoyant platform, wherein the buoyant platform comprises at least a first and a second support point located horizontally spaced apart in relation to each other and at a substantially similar level above a surface of the open water, wherein the crane machine comprises at least a rotatable crane base structure, a main boom and hoist components for lifting and lowering materials, wherein the crane machine, when arranged on the wind power station with the main boom connected to the rotatable crane base structure and extending in an upwards direction and with the hoist components installed, is configured to lift/lower heavy wind turbine components to/from an upper part of the wind turbine, wherein the first support point is provided with a connection element configured to be connected to an undercarriage for support of the rotatable crane base structure.

### BRIEF DESCRIPTION OF DRAWINGS

In the description of the invention given below reference is made to the following figures, in which:
Figure 1 shows a side view of an example of a floating wind power station onto which a crane machine has been arranged;
Figure 2 shows a top view of the wind power station of figure 1;
Figures 3-13 show different steps in an example of a method for arranging the crane machine onto the wind power station according to figures 1-2; and
Figure 4 shows an example of a floating wind power station and a vessel carrying a dissembled crane machine where arranging of the crane machine onto the wind power station is in progress.

### DESCRIPTION OF EXAMPLE EMBODIMENTS OF THE INVENTION

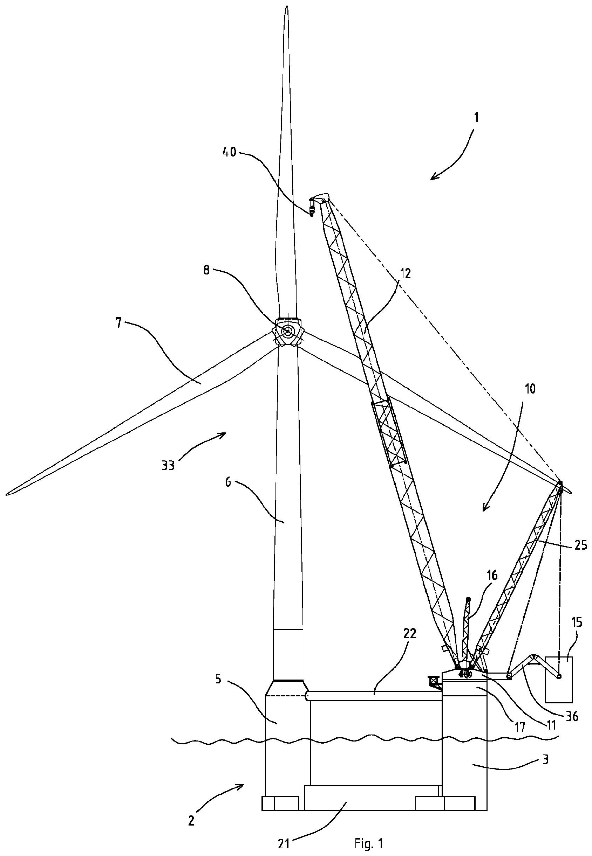

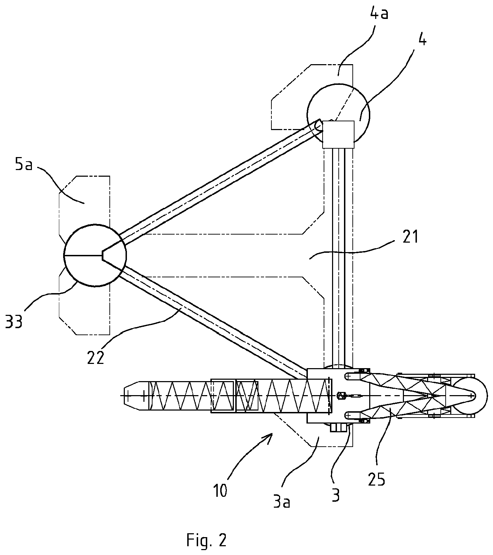

Figures 1 and 2 show a side view and top view, respectively, of an example of a wind power station 1 that floats in open water, wherein a crane machine 10 has been arranged onto the wind power station 1.

The wind power station 1 comprises a buoyant platform 2 provided with a wind turbine 33 extending upwards from the buoyant platform 2. The buoyant platform 2 is in this example a semi-submersible platform comprising first, second and third horizontally separated buoyant columns 3, 4, 5 connected by buoyant pontoons 21 and upper bracings 22 and provided with heave plates 3a, 4a, 5a.

The wind turbine 33 is arranged on the third column 5 and comprises a turbine tower 6 and, arranged in an upper part of the tower 6, three blades 7 operatively connected to an electric generator 8 via a gearbox.

The horizontal distance between the columns 3, 4, 5 is around 50 m and the height of the tower 6 is around 150 m.

The first and second columns 3, 4 form first and second support points 13, 14 used when arranging the crane on the platform 2.

As shown in figure 2, the wind turbine 33 and the first and second support points form a triangle in the horizontal plane.

The first support point 13, i.e. an upper side of the first column 3, is provided with a connection element (not shown in figures) configured to be connected to an undercarriage 17 for support of a rotatable crane base structure 11.

As shown in figures 2-13, the first and second support points 13, 14, i.e. the upper parts of the first and second columns 3, 4, are located horizontally spaced apart in relation to each other and at a substantially similar level above a surface of the open water (indicated by a wavy line in figure 1).

The crane machine 10 comprises a rotatable crane base structure 11, a main boom 12, which in this case is telescopic, and hoist components, such as a hook 40, hoist wires, winches and motors for driving of winches, for lifting and lowering materials. When the crane machine 10 is arranged on the wind power station 1 with the main boom 12 connected to the rotatable crane base structure 11 and extending in an upwards direction and with the hoist components 40 installed, the crane machine 10 is configured to lift/lower heavy wind turbine components 7, 8 to/from an upper part of the wind turbine 33.

The crane machine 10 further comprises an undercarriage 17 onto which the rotatable crane base structure 11 is rotatably supported when the crane machine is assembled. The undercarriage 17 is secured to the first support point/first column 3 by means of the (not shown) connection element. A preinstalled connection element is not necessary but simplifies arrangement of the undercarriage 17.

The crane machine 10 further comprises a derrick boom 25 configured to be connected via a lower end 25a thereof to the rotatable crane base structure 11 and extend upwards at an angle in relation to the main boom 12 so as to support the main boom 12 when arranging wires 27 between an upper part of the main boom 12 to the rotatable crane base structure 11 via an upper part 25b of the derrick boom.

The crane machine 10 further comprises an additional boom or frame structure 16, in this example an additional temporary derrick-type boom that is shorter than the derrick boom 25 and used for forming a temporary crane machine 30 as described below. The additional boom or frame structure 16 is here configured to be connected via a lower end thereof 16a to the rotatable crane base structure 11 and extend upwards.

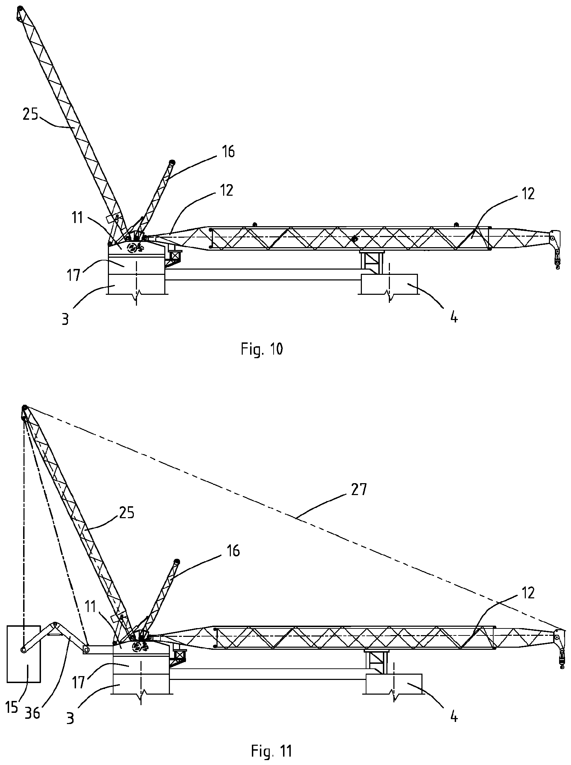

The crane machine 10 further comprises a counter weight 15 configured to be connected to the rotatable crane base structure 11 via a connection arrangement 36 so as to be located at a distance from the rotatable crane base structure 11 in the horizontal direction. As shown in e.g. figures 1 and 11, the connection arrangement 36 is hinged and provides for adjusting the horizontal position of the counter weight 15 in relation to the crane base structure 11. The counter weight 15 is in the form of a tank that can be filled with water, and the amount of water contained in the tank can be regulated.

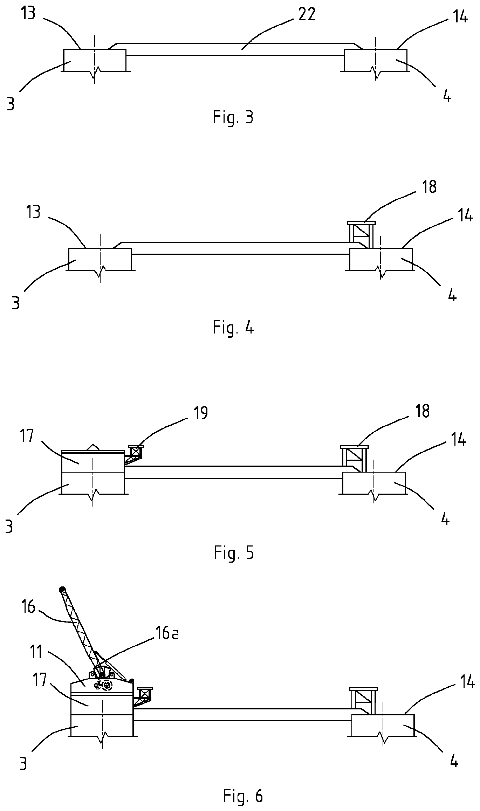

An example of how to arrange the crane machine 10 on the platform 2 is shown in figures 3-13. Generally, the method comprises the steps of:
- providing the crane machine 10 in an at least partly disassembled state onto one or more vessels and arranging the one or more vessels in association with the buoyant platform 2,
- moving/lifting the at least partly disassembled crane machine 10 from the one or more vessels onto the buoyant platform 2, wherein the rotatable crane base structure 11 and the main boom 12 are disconnected from each other during moving/lifting, and
- assembling the crane machine 10 when positioned on the buoyant platform 2.

Most crane parts are lifted and moved from the vessel to the platform 2 using a crane provided onto the vessel. However, the main boom 12 is too large and heavy for the vessel crane and is therefore lifted and moved using the particular temporary crane machine 30 described further below.

More in detail the moving/lifting-step comprises:
- positioning the rotatable crane base structure 11 at the first support point 3, 13;
- positioning the main boom 12 substantially horizontally with a first end portion 12a located at the first support point 3, 13, and
- positioning the main boom 12 so as to be supported by the second support point 4, 14 as well as by the first support point 3, 13 and/or a further support point arranged between the first and second support points 3, 13, 4, 14,
and the assembling-step comprises:
- connecting the first end portion 12a of the main boom 12 to the rotatable crane base structure 11 when the main boom 12 and the rotatable crane base structure 11 are positioned on the buoyant platform 2.

An example of a whole step-by-step can be described as follows (where figure 3 shows a side view of the upper parts of the first and second columns 3, 4 forming the corresponding first and second support points 13, 14):
Figure 4 - arranging a sub-support 18 on the second support point 14;
Figure 5 - positioning and securing the undercarriage 17 at the first support point 13 and arranging a further sub-support 19 on the first support point 13;
Figure 6 - positioning the rotatable crane base structure 11 onto the undercarriage 17 at the first support point 13 and connecting the additional temporary derrick-type boom 16 to the crane base structure 11;

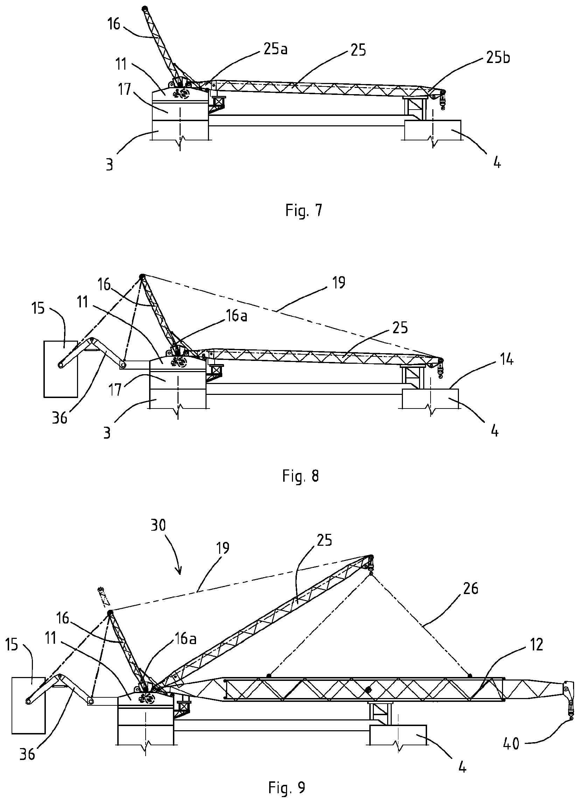

Figure 7 - positioning the derrick boom 25 with its lower end 25a onto the rotatable crane base structure 11 at first support point 13 and connecting the derrick boom 25 to the rotatable crane base structure 11;
Figure 8 - connecting the counter weight 15 to the rotatable crane base structure 11 via the connection arrangement 36; and further (see also figure 9), forming the temporary crane machine 30 comprising the derrick boom 25, the additional temporary derrick-type boom 16, the counter weight 15, and the rotatable crane base structure 11, wherein the parts are connected by supporting wires 19 and wherein the derrick boom 25 forms a main crane boom for the temporary crane machine 30 and wherein the additional temporary derrick-type boom 16 forms a derrick element for the main crane boom of the temporary crane machine 30;
Figure 9 - moving/lifting the main boom 12 from the one or more vessels onto the buoyant platform 2 using the temporary crane machine 30 (and lifting wire 26), and positioning the main boom 12 onto sub-supports 18, 19 at the first and second support points 13, 14;
Figure 10 - disconnecting the counter weight 15 and the wires 19, rotating the crane base structure 11 (and the components connected thereto) 180° and connecting the main boom 12 to the crane base structure 11;
Figure 11 - re-connecting the counter weight 15 to the crane base structure 11 (but on the opposite side compared to earlier) and arranging supporting wires 27 so as to form the main crane machine 10;

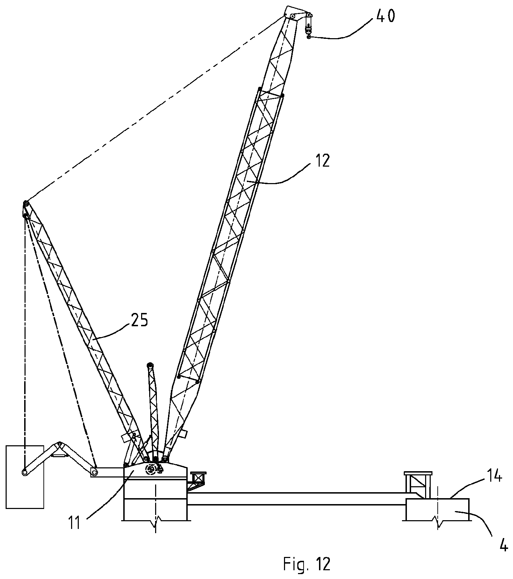

Figure 12 - raising the main boom 12 so as to extend upwards from the rotatable crane base structure 11 using the derrick boom 25, the counter weight 15, the rotatable crane base structure 11 and the supporting wires 27; and

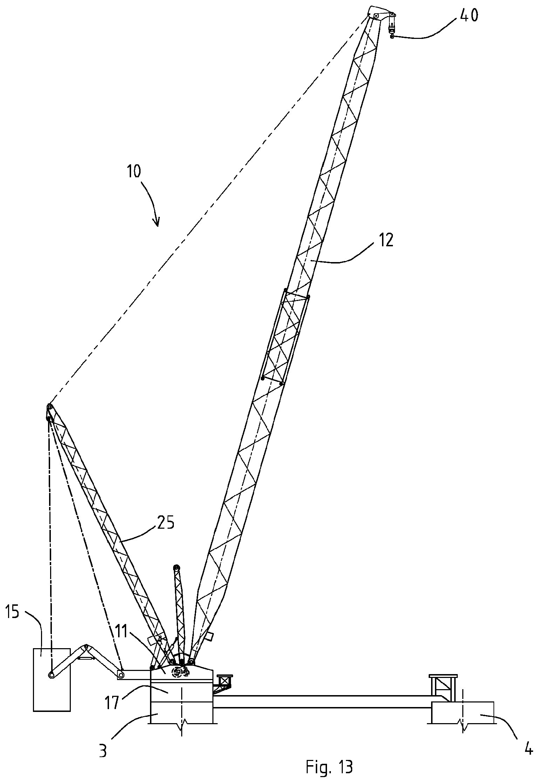

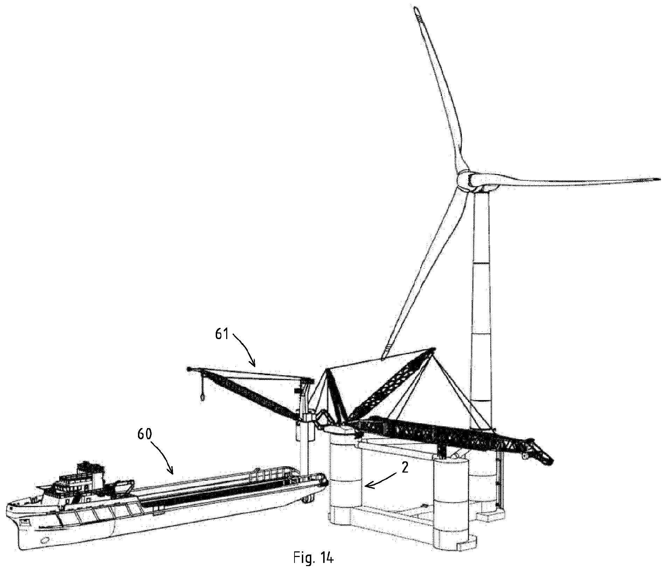

Figure 13 - extending the telescopic main boom 12 to full length of around 150 m.

The amount of water in the counter weight tank 15 may also be regulated before, during or after certain method steps.

Figure 4 shows an example of a floating wind power station and a vessel 60 carrying a dissembled crane machine where arranging of the crane machine onto the wind power station, i.e. onto the floating platform 2, is in progress. The vessel 60 is provided with a crane 61. Most parts of the dissembled crane machine are lifted and moved from the vessel 60 to the platform 2 using the vessel crane 61. However, the main boom is too large and heavy and has been lifted to the platform 2 using a temporary crane machine arranged onto the platform 2 as described in figure 8. Figure 4 corresponds to the method step shown in figure 9.

The invention is not limited by the embodiments described above but can be modified in various ways within the scope of the claims.

## Claims

1. Method for arranging a crane machine (10) on a wind power station (1) that floats in open water,
wherein the wind power station (1) comprises a buoyant platform (2) provided with a wind turbine (33) extending upwards from the buoyant platform (2), wherein the buoyant platform (2) comprises at least a first and a second support point (3, 4, 13, 14) located horizontally spaced apart in relation to each other and at a substantially similar level above a surface of the open water,
wherein the crane machine (10) comprises at least a rotatable crane base structure (11), a main boom (12) and hoist components (40) for lifting and lowering materials,
wherein the crane machine (10), when arranged on the wind power station (1) with the main boom (12) connected to the rotatable crane base structure (11) and extending in an upwards direction and with the hoist components (40) installed, is configured to lift/lower heavy wind turbine components (7, 8) to/from an upper part of the wind turbine (33),
wherein the method comprises the steps of:
- providing the crane machine (10) in an at least partly disassembled state onto one or more vessels (60) and arranging the one or more vessels (60) in association with the buoyant platform (2),
- moving/lifting the at least partly disassembled crane machine (10) from the one or more vessels (60) onto the buoyant platform (2), wherein the rotatable crane base structure (11) and the main boom (12) are disconnected from each other during moving/lifting,
- assembling the crane machine (10) when positioned on the buoyant platform (2),
wherein the moving/lifting-step comprises:
- positioning the rotatable crane base structure (11) at the first support point (3, 13);
- positioning the main boom (12) substantially horizontally with a first end portion (12a) located at the first support point (3, 13), and
- positioning the main boom (12) so as to be supported by the second support point (4, 14) as well as by the first support point (3, 13) and/or a further support point arranged between the first and second support points (3, 13, 4, 14),
wherein the assembling-step comprises:
- connecting the first end portion (12a) of the main boom (12) to the rotatable crane base structure (11) when the main boom (12) and the rotatable crane base structure (11) are positioned on the buoyant platform (2).

2. Method according to claim 1, wherein the crane machine (10) further comprises an undercarriage (17) onto which the rotatable crane base structure (11) is rotatably supported when the crane machine (10) is assembled, wherein the method comprises:
- positioning and securing the undercarriage (17) at the first support point (3, 13) before positioning the rotatable crane base structure (11) onto the undercarriage (17) at the first support point (3, 13).

3. Method according to claim 1 or 2, wherein the crane machine (10) further comprises a derrick boom (25) configured to be connected via a lower end (25a) thereof to the rotatable crane base structure (11) and extend upwards at an angle in relation to the main boom (12) so as to support the main boom (12) when arranging wires (27) between an upper part of the main boom (12) to the rotatable crane base structure (11) via an upper part (25b) of the derrick boom (25), wherein the method comprises:
- positioning the derrick boom (25) with its lower end (25a) at or onto the first support point (3, 13) and connecting the derrick boom (25) to the rotatable crane base structure (11).

4. Method according to claim 3, wherein the crane machine (10) further comprises an additional boom or frame structure (16) that is shorter than the derrick boom (25), wherein the additional boom or frame structure (16) is connected or configured to be connected via a lower end thereof (16a) to the rotatable crane base structure (11) and extend upwards, wherein the method comprises:
- arranging the additional boom or frame structure (16) at the rotatable crane base structure (11) so that the lower end (16a) of the additional boom or frame structure (16) is connected to the rotatable crane base structure (11).

5. Method according to any of the above claims, wherein the crane machine (10) further comprises a counter weight (15) configured to be connected to the rotatable crane base structure (11) via a connection arrangement (36) so as to be located at a distance from the rotatable crane base structure (11) in the horizontal direction, wherein the method comprises:
- connecting the counter weight (15) to the rotatable crane base structure (11) via the connection arrangement (36).

6. Method according to claims 3-5, wherein the method comprises:
- forming a temporary crane machine (30) comprising the derrick boom (25), the additional boom or frame structure (16), the counter weight (15) and the rotatable crane base structure (11), wherein the derrick boom (25) forms a main crane boom for the temporary crane machine (30) and wherein the additional boom or frame structure (16) forms a derrick element for the main crane boom of the temporary crane machine (30), and
- moving/lifting the main boom (12) from the one or more vessels onto the buoyant platform (2) using the temporary crane machine (30).

7. Method according to claims 3 and 5, wherein the method comprises:
- raising the main boom (12) so as to extend upwards from the rotatable crane base structure (11) using the derrick boom (25), the counter weight (15), and the rotatable crane base structure (11).

8. Method according to claim 5, wherein the counter weight (15) comprises a tank configured to be filled with water, wherein the method comprises:
- regulating the amount of water in the counter weight tank (15).

9. Method according to any of the above claims, wherein the buoyant platform (2) is a semi-submersible platform comprising at least two horizontally separated buoyant columns (3, 4, 5), wherein said columns (3, 4, 5) form the first and second support points (13, 14).

10. Method according to any of the above claims, wherein the first support point (13) is provided with a connection element configured to be connected to an undercarriage (17) for support of the rotatable crane base structure (11).

11. Method according to any of the above claims, wherein the wind turbine (33) comprises a tower (6) and, arranged in an upper part of the tower (6), one or more blades (7) operatively connected to an electric generator (8).

12. Method according to any of the above claims, wherein the wind turbine (33) is arranged on a buoyant column (5) forming part of the buoyant platform (2).

13. Method according to any of the above claims, wherein the first and second support points (13, 14) are located at least 30 m from each other in a horizontal direction.

14. Method according to any of the above claims, wherein each of the first and second support points (13, 14) is located at a distance from the wind turbine (33) in the horizontal direction so that the wind turbine (33) and the first and second support points (13, 14) form a triangle in the horizontal plane.

15. Wind power station (1) comprising a buoyant platform (2) provided with a wind turbine (33) extending upwards from the buoyant platform (2),
wherein the buoyant platform (2) comprises at least a first and a second support point (3, 4, 13, 14) located horizontally spaced apart in relation to each other and at a substantially similar level above a surface of an open water in which the wind power station (1) floats,
wherein the wind power station (1) comprises a crane machine (10) that comprises at least a rotatable crane base structure (11), a main boom (12) and hoist components (40) for lifting and lowering materials,
wherein the crane machine (10), when arranged on the wind power station (1) with the main boom (12) connected to the rotatable crane base structure (11) and extending in an upwards direction and with the hoist components (40) installed, is configured to lift/lower heavy wind turbine components (7, 8) to/from an upper part of the wind turbine (33),
wherein the first support point (3, 13) is provided with a connection element configured to be connected to an undercarriage (17) for support of the rotatable crane base structure (11).

## Patentansprüche

1. Verfahren zum Anordnen einer Kranmaschine (10) an einer Windenergieanlage (1), die auf einem offenen Gewässer schwimmt, wobei die Windenergieanlage (1) eine schwimmfähige Plattform (2) umfasst, die mit einer Windturbine (33) bereitgestellt ist, die sich von der schwimmfähigen Plattform (2) empor erstreckt, wobei die schwimmfähige Plattform (2) mindestens einen ersten und einen zweiten Stützpunkt (3, 4, 13, 14) umfasst, die sich horizontal zueinander beabstandet und auf einer im Wesentlichen ähnlichen Ebene über einer Oberfläche des offenen Gewässers befinden,
wobei die Kranmaschine (10) mindestens eine drehbare Kranbasisstruktur (11), einen Hauptausleger (12) und Hubkomponenten (40) zum Hochziehen und Absenken von Materialien umfasst,
wobei die Kranmaschine (10), wenn sie an der Windenergieanlage (1) angeordnet ist, während der Hauptausleger (12) mit der drehbaren Kranbasisstruktur (11) verbunden ist und sich in einer Emporrichtung erstreckt und während die Hubkomponenten (40) installiert sind, dazu konfiguriert ist, schwere Windturbinenkomponenten (7, 8) zu/von einem oberen Teil der Windturbine (33) hochzuziehen/abzusenken,
wobei das Verfahren die folgenden Schritte umfasst:
- Bereitstellen der Kranmaschine (10) in einem mindestens teilweise zerlegten Zustand auf ein oder mehrere Schiffe (60) und Anordnen des einen oder der mehreren Schiffe (60) in Zuordnung zu der schwimmfähigen Plattform (2),
- Verlegen/Hochziehen der mindestens teilweise zerlegten Kranmaschine (10) von dem einen oder den mehreren Schiffen (60) auf die schwimmfähige Plattform (2), wobei die drehbare Kranbasisstruktur (11) und der Hauptausleger (12) während des Verlegens/Hochziehens voneinander gelöst sind,
- Zusammenbauen der Kranmaschine (10), wenn sie auf der schwimmfähigen Plattform (2) positioniert ist,
wobei der Schritt des Verlegens/Hochziehens Folgendes umfasst:
- Positionieren der drehbaren Kranbasisstruktur (11) an den ersten Stützpunkt (3, 13);
- im Wesentlichen horizontales Positionieren des Hauptauslegers (13), wobei sich ein erster Endabschnitt (12a) an dem ersten Stützpunkt (3, 13) befindet, und
- Positionieren des Hauptauslegers (12), um durch den zweiten Stützpunkt (4, 14) wie auch durch den ersten Stützpunkt (3, 13) und/oder einen weiteren Stützpunkt, der zwischen dem ersten und dem zweiten Stützpunkt (3, 13, 4, 14) angeordnet ist, abgestützt zu werden,
wobei der Schritt des Zusammenbauens Folgendes umfasst:
- Verbinden des ersten Endabschnitts (12a) des Hauptauslegers (12) mit der drehbaren Kranbasisstruktur (11), wenn der Hauptausleger (12) und die drehbare Kranbasisstruktur (11) auf der schwimmfähigen Plattform (2) positioniert sind.

2. Verfahren nach Anspruch 1, wobei die Kranmaschine (10) ferner ein Fahrwerk (17) umfasst, auf das die drehbare Kranbasisstruktur (11) drehbar abgestützt wird, wenn die Kranmaschine (10) zusammengebaut wird, wobei das Verfahren Folgendes umfasst:
- Positionieren und Sichern des Fahrwerks (17) an dem ersten Stützpunkt (3, 13) vor Positionieren der drehbaren Kranbasisstruktur (11) auf das Fahrwerk (17) an dem ersten Stützpunkt (3, 13).

3. Verfahren nach Anspruch 1 oder 2, wobei die Kranmaschine (10) ferner einen Derrickausleger (25) umfasst, der dazu konfiguriert ist, über ein unteres Ende (25a) davon mit der drehbaren Kranbasisstruktur (11) verbunden zu sein und sich in einem Winkel in Bezug auf den Hauptausleger (12) empor zu erstrecken, um den Hauptausleger (12) beim Anordnen von Seilen (27) zwischen einem oberen Teil des Hauptauslegers (12) über einen oberen Teil (25b) des Derrickauslegers (25) auf die drehbare Kranbasisstruktur (11) abzustützen, wobei das Verfahren Folgendes umfasst:
- Positionieren des Derrickauslegers (25) mit seinem unteren Ende (25a) an oder auf den ersten Stützpunkt (3, 13) und Verbinden des Derrickauslegers (25) mit der drehbaren Kranbasisstruktur (11).

4. Verfahren nach Anspruch 3, wobei die Kranmaschine (10) ferner einen zusätzlichen Ausleger oder eine zusätzliche Gerüststruktur (16) umfasst, der/die kürzer als der Derrickausleger (25) ist, wobei der zusätzliche Ausleger oder die zusätzliche Gerüststruktur (16) über ein unteres Ende davon (16a) mit der drehbaren Kranbasisstruktur (11) verbunden oder dazu konfiguriert ist, mit ihr verbunden zu werden und sich empor zu erstrecken, wobei das Verfahren Folgendes umfasst:
- Anordnen des zusätzlichen Auslegers oder der zusätzlichen Gerüststruktur (16) an der drehbaren Kranbasisstruktur (11), sodass das untere Ende (16a) des zusätzlichen Auslegers oder der zusätzlichen Gerüststruktur (16) mit der drehbaren Kranbasisstruktur (11) verbunden ist.

5. Verfahren nach einem der vorhergehenden Ansprüche, wobei die Kranmaschine (10) ferner ein Gegengewicht (15) umfasst, das dazu konfiguriert ist, über eine Verbindungsanordnung (36) mit der drehbaren Kranbasisstruktur (11) verbunden zu werden, um sich in einem Abstand zu der drehbaren Kranbasisstruktur (11) in der horizontalen Richtung zu befinden, wobei das Verfahren Folgendes umfasst:
- Verbinden des Gegengewichts (15) mit der drehbaren Kranbasisstruktur (11) über die Verbindungsanordnung (36).

6. Verfahren nach Anspruch 3-5, wobei das Verfahren Folgendes umfasst:
- Bilden einer vorübergehenden Kranmaschine (30), die den Derrickausleger (25), den zusätzlichen Ausleger oder die zusätzliche Gerüststruktur (16), das Gegengewicht (15) und die drehbare Kranbasisstruktur (11) umfasst, wobei der Derrickausleger (25) einen Hauptkranausleger für die vorübergehende Kranmaschine (30) bildet und wobei der zusätzliche Ausleger oder die zusätzliche Gerüststruktur (16) ein Derrickelement für den Hauptkranausleger der vorübergehenden Kranmaschine (30) bildet, und
- Verlegen/Hochziehen des Hauptauslegers (12) von dem einen oder den mehreren Schiffen auf die schwimmfähige Plattform (2) unter Verwendung der vorübergehenden Kranmaschine (30).

7. Verfahren nach Anspruch 3 und 5, wobei das Verfahren Folgendes umfasst:
- Anheben des Hauptauslegers (12), um sich von der drehbaren Kranbasisstruktur (11) empor zu erstrecken, unter Verwendung des Derrickauslegers (25), des Gegengewichts (15) und der drehbaren Kranbasisstruktur (11).

8. Verfahren nach Anspruch 5, wobei das Gegengewicht (15) einen Tank umfasst, der dazu konfiguriert ist, mit Wasser gefüllt zu werden, wobei das Verfahren Folgendes umfasst:
- Regeln der Wassermenge in dem Gegengewichtstank (15).

9. Verfahren nach einem der vorhergehenden Ansprüche, wobei die schwimmfähige Plattform (2) eine Halbtaucherplattform ist, die mindestens zwei horizontal getrennte schwimmfähige Säulen (3, 4, 5) umfasst, wobei die Säulen (3, 4, 5) den ersten und den zweiten Stützpunkt (13, 14) bilden.

10. Verfahren nach einem der vorhergehenden Ansprüche, wobei der erste Stützpunkt (13) mit einem Verbindungselement bereitgestellt ist, das dazu konfiguriert ist, zur Abstützung der drehbaren Kranbasisstruktur (11) mit einem Fahrwerk (17) verbunden zu werden.

11. Verfahren nach einem der vorhergehenden Ansprüche, wobei die Windturbine (33) einen Turm (6) und, in einem oberen Teil des Turmes (6) angeordnet, eine oder mehrere Laufschaufeln (7) umfasst, die betriebswirksam mit einem Elektrogenerator (8) verbunden sind.

12. Verfahren nach einem der vorhergehenden Ansprüche, wobei die Windturbine (33) an einer schwimmfähigen Säule (5) angeordnet ist, die Teil der schwimmfähigen Plattform (2) ist.

13. Verfahren nach einem der vorhergehenden Ansprüche, wobei sich der erste und der zweite Stützpunkt (13, 14) mindestens 30 m voneinander in einer horizontalen Richtung befinden.

14. Verfahren nach einem der vorhergehenden Ansprüche, wobei sich jeder des ersten und des zweiten Stützpunkts (13, 14) in einem Abstand zu der Windturbine (33) in der horizontalen Richtung befindet, sodass die Windturbine (33) und der erste und der zweite Stützpunkt (13, 14) ein Dreieck auf der horizontalen Ebene bilden.

15. Windenergieanlage (1), umfassend eine schwimmfähige Plattform (2), die mit einer Windturbine (33) bereitgestellt ist, die sich von der schwimmfähigen Plattform (2) empor erstreckt,
wobei die schwimmfähige Plattform (2) mindestens einen ersten und einen zweiten Stützpunkt (3, 4, 13, 14) umfasst, die sich horizontal zueinander beabstandet und auf einer im Wesentlichen ähnlichen Ebene über einer Oberfläche eines offenen Gewässers befinden, auf der die Windenergieanlage (1) schwimmt,
wobei die Windenergieanlage (1) eine Kranmaschine (10) umfasst, die mindestens eine drehbare Kranbasisstruktur (11), einen Hauptausleger (12) und Hubkomponenten (40) zum Hochziehen und Absenken von Materialien umfasst,
wobei die Kranmaschine (10), wenn sie an der Windenergieanlage (1) angeordnet ist, während der Hauptausleger (12) mit der drehbaren Kranbasisstruktur (11) verbunden ist und sich in einer Emporrichtung erstreckt und während die Hubkomponenten (40) installiert sind, dazu konfiguriert ist, schwere Windturbinenkomponenten (7, 8) zu/von einem oberen Teil der Windturbine (33) hochzuziehen/abzusenken,
wobei der erste Stützpunkt (3, 13) mit einem Verbindungselement bereitgestellt ist, das dazu konfiguriert ist, zur Abstützung der drehbaren Kranbasisstruktur (11) mit einem Fahrwerk (17) verbunden zu werden.

## Revendications

1. Procédé d'agencement d'une grue (10) sur une centrale éolienne (1) flottant en eau libre,
dans lequel la centrale éolienne (1) comprend une plate-forme flottante (2) pourvue d'une éolienne (33) s'étendant vers le haut à partir de la plate-forme flottante (2),
dans lequel la plate-forme flottante (2) comprend au moins un premier et un second point d'appui (3, 4, 13, 14) situés horizontalement espacés l'un de l'autre et à un niveau sensiblement similaire au-dessus d'une surface de l'eau libre, dans lequel la grue (10) comprend au moins une structure de base de grue rotative (11), une flèche principale (12) et des composants de levage (40) pour soulever et abaisser des matériaux,
dans lequel la grue (10), lorsqu'elle est agencée sur la centrale éolienne (1), avec la flèche principale (12) reliée à la structure de base de grue rotative (11) et s'étendant vers le haut et avec les composants de levage (40) installés, est conçue pour soulever/abaisser des composants lourds d'éolienne (7, 8) vers/depuis une partie supérieure de l'éolienne (33), dans lequel le procédé comprend les étapes de :
- fourniture de la grue (10) dans un état au moins partiellement démonté sur un ou plusieurs navires (60) et agencement des un ou plusieurs navires (60) en association avec la plate-forme flottante (2),
- déplacement/levage de la grue au moins partiellement démontée (10) des un ou plusieurs navires (60) sur la plate-forme flottante (2), dans lequel la structure de base de grue rotative (11) et la flèche principale (12) ne sont pas reliées l'une à l'autre pendant le déplacement/levage,
- assemblage de la grue (10) lorsqu'elle est positionnée sur la plate-forme flottante (2),
dans lequel l'étape de déplacement/levage comprend :
- le positionnement de la structure de base de grue rotative (11) au premier point d'appui (3, 13) ;
- le positionnement de la flèche principale (12) sensiblement horizontalement avec une première partie d'extrémité (12a) située au niveau du premier point d'appui (3, 13), et
- le positionnement de la flèche principale (12) de manière à être supportée par le second point d'appui (4, 14) ainsi que par le premier point d'appui (3, 13) et/ou un autre point d'appui agencé entre les premier et second points d'appui (3, 13, 4, 14),
dans lequel l'étape d'assemblage comprend :
- le fait de relier la première partie d'extrémité (12a) de la flèche principale (12) à la structure de base de grue rotative (11) lorsque la flèche principale (12) et la structure de base de grue rotative (11) sont positionnées sur la plate-forme flottante (2).

2. Procédé selon la revendication 1, dans lequel la grue (10) comprend en outre un train de roulement (17) sur lequel la structure de base de grue rotative (11) est supportée de manière rotative lorsque la grue (10) est assemblée, dans lequel le procédé comprend :
- le positionnement et la fixation du train de roulement (17) au premier point d'appui (3, 13) avant de positionner la structure de base de grue rotative (11) sur le train de roulement (17) au premier point d'appui (3, 13).

3. Procédé selon la revendication 1 ou 2, dans lequel la grue (10) comprend en outre une flèche de derrick (25) conçue pour être reliée via une extrémité inférieure (25a) de celle-ci à la structure de base de grue rotative (11) et s'étendre vers le haut selon un angle par rapport à la flèche principale (12) de manière à soutenir la flèche principale (12) lors de l'agencement des câbles (27) entre une partie supérieure de la flèche principale (12) et la structure de base de grue rotative (11) via une partie supérieure (25b) de la flèche de derrick (25), dans lequel le procédé comprend :
- le positionnement de la flèche de derrick (25) avec son extrémité inférieure (25a) au niveau ou sur le premier point d'appui (3, 13) et le fait de relier la flèche de derrick (25) à la structure de base de grue rotative (11).

4. Procédé selon la revendication 3, dans lequel la grue (10) comprend en outre une structure de flèche ou de châssis supplémentaire (16) qui est plus courte que la flèche de derrick (25), dans lequel la structure de flèche ou de châssis supplémentaire (16) est reliée ou conçue pour être reliée via une extrémité inférieure (16a) de celle-ci à la structure de base de grue rotative (11) et s'étendre vers le haut, dans lequel le procédé comprend :
- l'agencement de la structure de flèche ou de châssis supplémentaire (16) au niveau de la structure de base de grue rotative (11) de telle sorte que l'extrémité inférieure (16a) de la structure de flèche ou de châssis supplémentaire (16) soit reliée à la structure de base de grue rotative (11).

5. Procédé selon l'une quelconque des revendications ci-dessus, dans lequel la grue (10) comprend en outre un contrepoids (15) conçu pour être relié à la structure de base de grue rotative (11) via un agencement de liaison (36) de manière à être situé à une distance de la structure de base de grue rotative (11) dans la direction horizontale, dans lequel le procédé comprend :
- le fait de relier le contrepoids (15) à la structure de base de grue rotative (11) via l'agencement de liaison (36).

6. Procédé selon les revendications 3 à 5, dans lequel le procédé comprend :
- la formation d'une grue temporaire (30) comprenant la flèche de derrick (25), la structure de flèche ou de châssis supplémentaire (16), le contrepoids (15) et la structure de base de grue rotative (11), dans lequel la flèche de derrick (25) forme une flèche de grue principale pour la grue temporaire (30) et dans lequel la structure de flèche ou de châssis supplémentaire (16) forme un élément de derrick pour la flèche de grue principale de la grue temporaire (30), et
- le déplacement/levage de la flèche principale (12) des un ou plusieurs navires sur la plate-forme flottante (2) à l'aide de la grue temporaire (30).

7. Procédé selon les revendications 3 et 5, dans lequel le procédé comprend :
- le fait d'élever la flèche principale (12) de manière à s'étendre vers le haut depuis la structure de base de grue rotative (11) à l'aide de la flèche de derrick (25), du contrepoids (15) et de la structure de base de grue rotative (11) .

8. Procédé selon la revendication 5, dans lequel le contrepoids (15) comprend un réservoir conçu pour être rempli d'eau, dans lequel le procédé comprend :
- la régulation de la quantité d'eau dans le réservoir de contrepoids (15).

9. Procédé selon l'une quelconque des revendications ci-dessus, dans lequel la plate-forme flottante (2) est une plate-forme semi-submersible comprenant au moins deux colonnes flottantes (3, 4, 5) séparées horizontalement, dans lequel lesdites colonnes (3, 4, 5) forment les premier et second points d'appui (13, 14).

10. Procédé selon l'une quelconque des revendications ci-dessus, dans lequel le premier point d'appui (13) est pourvu d'un élément de liaison conçu pour être relié à un train de roulement (17) pour supporter la structure de base de grue rotative (11).

11. Procédé selon l'une quelconque des revendications ci-dessus, dans lequel l'éolienne (33) comprend une tour (6) et, agencées dans une partie supérieure de la tour (6), une ou plusieurs pales (7) reliées de manière fonctionnelle à un générateur électrique (8).

12. Procédé selon l'une quelconque des revendications ci-dessus, dans lequel l'éolienne (33) est agencée sur une colonne flottante (5) faisant partie de la plate-forme flottante (2).

13. Procédé selon l'une quelconque des revendications ci-dessus, dans lequel les premier et second points d'appui (13, 14) sont situés à au moins 30 m l'un de l'autre dans une direction horizontale.

14. Procédé selon l'une quelconque des revendications ci-dessus, dans lequel chacun des premier et second points d'appui (13, 14) est situé à distance de l'éolienne (33) dans la direction horizontale de sorte que l'éolienne (33) et les premier et second points d'appui (13, 14) forment un triangle dans le plan horizontal.

15. Centrale éolienne (1) comprenant une plate-forme flottante (2) pourvue d'une éolienne (33) s'étendant vers le haut à partir de la plate-forme flottante (2),
dans laquelle la plate-forme flottante (2) comprend au moins un premier et un second point d'appui (3, 4, 13, 14) situés horizontalement espacés l'un de l'autre et à un niveau sensiblement similaire au-dessus d'une surface d'eau libre dans laquelle la centrale éolienne (1) flotte,
dans laquelle la centrale éolienne (1) comprend une grue (10) qui comprend au moins une structure de base de grue rotative (11), une flèche principale (12) et des composants de levage (40) pour soulever et abaisser des matériaux,
dans laquelle la grue (10), lorsqu'elle est agencée sur la centrale éolienne (1), avec la flèche principale (12) reliée à la structure de base de grue rotative (11) et s'étendant vers le haut et avec les composants de levage (40) installés, est conçue pour soulever/abaisser des composants lourds d'éolienne (7, 8) vers/depuis une partie supérieure de l'éolienne (33), dans laquelle le premier point d'appui (3, 13) est pourvu d'un élément de liaison conçu pour être relié à un train de roulement (17) pour supporter la structure de base de grue rotative (11).
